Europäisches Patentamt

European Patent Office

Office européen des brevets

(11) Publication number: **0 403 688**
**A1**

## EUROPEAN PATENT APPLICATION

(21) Application number: 89118316.2

(51) Int. Cl.⁵: **C08K 7/02, H01B 3/00**

(22) Date of filing: 03.10.89

(30) Priority: 03.10.88 US 251783

(43) Date of publication of application:
27.12.90 Bulletin 90/52

(84) Designated Contracting States:
**BE CH DE ES FR GB IT LI NL SE**

(71) Applicant: **E.I. DU PONT DE NEMOURS AND COMPANY**
**1007 Market Street**
**Wilmington Delaware 19898(US)**

(72) Inventor: **Deakyne, Clifford Karl**
**3711 Oak Ridge Road**
**Wilmington Delaware 19808(US)**
Inventor: **Lavin, John Gerard**
**15 Wellesley Road**
**Swarthmore Pennsylvania 19081(US)**

(74) Representative: **Abitz, Walter, Dr.-Ing. et al**
**Abitz, Morf, Gritschneder, Freiherr von**
**Wittgenstein Postfach 86 01 09**
**D-8000 München 86(DE)**

(54) **Improved thermal conductive material.**

(57) Carbon fibers which have a lamellar microstructure made from mesophase pitch are used to reinforce polymer resins to form a composite. The composite exhibits high thermal conductivity values.

EP 0 403 688 A1

## Improved Thermal Conductive Material

### Background of the Invention

This invention relates to thermal conductive material and, more particularly, it relates to a carbon fiber reinforced resin matrix for use as a strong, structurally stable thermal conductive material.

The market segment for electrical devices such as for windings of motors, transformers and solenoids is increasingly moving to miniaturization of such devices. This in turn leads to a rise in internal equipment operating temperature resulting in not only a need for higher temperature ratings on insulation materials used for these applications, but also a need for materials with improved thermal conductivity properties.

### Summary of the Invention

A composite material has been developed to complement the move toward miniaturization of electrical devices which exhibits high strength structural stability and has improved thermal conductivity capability. This material comprises 10 to 70% by weight carbon fiber and preferably about 15 to about 60% by weight carbon fiber, the balance can be made up of a resin or a combination of an alternate fiber or filler. The carbon fibers are preferably centrifugally spun from a mesophase pitch as disclosed in EP-A-88 114 335.8 (U.S. Patent Application Serial No. 092,217 filed September 2, 1987)which is incorporated herein by reference. Preferably, the fibers have a lamellar microstructure and a distribution of diameters ranging from about 1 micrometer to more than 10 micrometers, and a number average less than 8 micrometers. The fibers also are heat treated in an inert atmosphere to a temperature above 1600° C, more preferably above 2400° C.

Suitable resinous materials which may be used as the resin include, but are not limited to, polyethylene terephthalate, Teflon® PFA by Du Pont, amorphous copolyamide as described in U.S. Patent No. 4,681,411 and Hytrel® 7246 by Du Pont.

### Detailed Description of the Preferred Embodiment

The composite material is made by feeding the resin and a carbon fiber batt made according to the disclosure in above-noted patent application into a 2" single screw extruder and extruding the composite material as a strand which is then chopped and collected. The chopped strand is then used in various molding processes to form articles having high thermal conductivity.

Thermal conductivity (T.C.) is measured in accordance with ASTM Standard F-433 with a Dynatech C-Matic instrument, model TCHM-DV, and is designated as BTU/hr./ft²/° F/in.

The composite material exhibits a three dimensional arrangement of fibers within the resin matrix as estimated from percent shrinkage data in the x, y, and z coordinate axes directions from mold size to the final part. More particularly, essentially equal percent shrinkage of the final part in the x, y, and z directions indicates three dimensional isotropic fiber reinforcement while percent shrinkage of the final part that varies by several orders of magnitude between directions suggests highly oriented reinforcing fibers.

### Example

A multiple six layer sandwich consisting of alternate layers of 5-mil thick Du Pont Teflon® PFA film and mesopitch based graphite fiber mat, made according to the procedure described in EP-A-88 114 335.8, is formed into a 7" x 7" mold of a standard compression molding machine. This multilayer sandwich is successively cold compressed for one minute at 1 ton, 2 ton and 2.5 ton pressures. The mold is then put into a hot press at 740° F and the mass consolidated according to the following schedule:
5 min contact pressure
5 min 1.25 ton pressure
20 min 12.5 ton pressure
then cooled at 1.25 ton pressure.

The laminate is later repressed to improve the uniformity of the surface by reinserting into the mold and heating to 740° F and pressing to 37.5 tons for 20 min, then cooling at 1.25 tons.

A section of a laminate, made according to the above procedure, was tested for thermal conductivity in accordance with ASTM Standard F-433 and shown to be about 14 BTU/° F/ft²/in versus about 1.3 for the matrix.

While this material has been described for use with electrical devices, it is to be understood that it has utility in other fields such as for molding parts requiring improved thermal conductivity.

### Claims

1. A thermal conductive material comprising: a resin reinforced with a three-dimensional arrangement of mesophase pitch based carbon fibers.

2. The material of claim 1 wherein said carbon fibers have a predominately lamellar structure.

3. The material as defined in claim 1 or 2 wherein said fibers have a distribution of diameters ranging from about 1 micrometer to more than 10 micrometers.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 138 525  (D.A. SCHULZ) --- | | C 08 K   7/02 H 01 B   3/00 |
| A | EP-A-0 206 254  (SIEMENS AKTIENGESELLSCHAFT BERLIN UND MÜNCHEN) --- | | |
| A | EP-A-0 257 466  (GENERAL ELECTRIC CO.) --- | | |
| A | WO-A-8 600 629  (UNIVERSITE CATHOLIQUE DE LOUVAIN) ----- | | |

| TECHNICAL FIELDS SEARCHED (Int. Cl.5) |
|---|
| C 08 K B 32 B C 08 J C 08 L H 01 B |

The present search report has been drawn up for all claims

| Place of search | Date of completion of the search | Examiner |
|---|---|---|
| THE HAGUE | 11-09-1990 | PAULSSON R.L. |

EPO FORM 1503 03.82 (P0401)